# NEUE EUROPÄISCHE PATENTSCHRIFT

(11) **EP 2 747 606 B2**
(45) Veröffentlichungstag und Bekanntmachung des Hinweises auf die Entscheidung über den Einspruch: **15.03.2023**
(45) Hinweis auf die Patenterteilung: 10.12.2014
(21) Anmeldenummer: 12795745.4
(22) Anmeldetag: 18.10.2012
(51) Int. Cl.: A47J 27/14, F24C 14/00, B08B 9/093

(54) **VERFAHREN ZUR REINIGUNG EINES TIEGELS SOWIE GARGERÄT MIT EINEM TIEGEL UND EINER REINIGUNGSEINRICHTUNG**
METHOD FOR CLEANING A PAN AND COOKING APPLIANCE WITH A PAN AND A CLEANING DEVICE
PROCÉDÉ DE NETTOYAGE D'UNE CUVE ET APPAREIL DE CUISSON POURVU D'UNE CUVE ET D'UN DISPOSITIF DE NETTOYAGE

(30) Priorität: 18.10.2011 DE 102011116091
(43) Veröffentlichungstag der Anmeldung: 02.07.2014
(73) Patentinhaber: MKN Maschinenfabrik Kurt Neubauer GmbH & Co. KG, 38300 Wolfenbüttel (DE)
(72) Erfinder: HELM, Peter, 38304 Wolfenbüttel (DE)
(74) Vertreter: Strobel, Wolfgang
(86) Internationale Anmeldenummer: PCT/EP2012/070688
(87) Internationale Veröffentlichungsnummer: WO 2013/057209

(56) Entgegenhaltungen:
- EP-A1- 1 260 769
- EP-A1- 1 297 907
- EP-A1- 1 953 458
- EP-A2- 1 209 419
- EP-A2- 1 275 334
- WO-A1-00/12942
- DE-A1- 2 842 771
- DE-A1- 10 134 005
- DE-A1-102007 005 503
- DE-U1-202008 006 364
- US-B1- 6 405 738

## Beschreibung

Die vorliegende Erfindung betrifft ein Verfahren zum Reinigen des Garraums eines Gargeräts mit einem Tiegel nach dem Oberbegriff des Anspruchs 1.

Weiterhin betrifft die vorliegende Erfindung ein Gargerät zur Behandlung von Nahrungsmitteln, mit einem Tiegel und einer Reinigungseinrichtung, nach dem Oberbegriff des Anspruchs 6.

Gargeräte für die Zubereitung von Nahrungsmitteln umfassen Bauformen, die einen Tiegel aufweisen, dessen Innenraum den Garraum bildet, der gegebenenfalls von einem Deckel verschließbar ist. Derartige Gargeräte finden insbesondere Anwendung im Bereich gewerblicher Großküchenanwendungen und in der Gastronomie. Derartige tiegel-, pfannen- oder wannenförmigen Garräume in diesen Gargeräte eignen sich insbesondere für die Zubereitung von flüssigen, cremigen oder schüttfähigen Nahrungsmitteln also beispielsweise für Suppen, Gulasch, Gemüse, Reis oder Pasta. Darüber hinaus sind diese Gargeräte geeignet, Speisen, wie beispielsweise Rührei zuzubereiten oder Fleisch zu grillen.

Es ist darüber hinaus auch möglich, in derartigen Gargeräten andere Gerichte oder auch verschiedene Gerichte in mehreren Etagen mit einzustellenden Geräten übereinander zuzubereiten.

Die für einen hohen Durchsatz geeigneten Gargeräte müssen nach entsprechendem Zubereitungsvorgang gereinigt werden. Dies geschieht in der Praxis bisher stets manuell. Hierzu wird üblicherweise der Deckel des Tiegels aufgeklappt, um den Garraum für den Nutzer zugänglich zu machen. Mit einer Handbrause wird der Garraum mit einer Reinigungsflüssigkeit beaufschlagt, die für einen gewissen Zeitraum, gegebenenfalls unter Erwärmung, einwirkt. Nach einer Einwirkzeit führt der Benutzer eine mechanische Reinigung beispielsweise mittels Bürsten durch. Abschließend hat der Benutzer dafür zu sorgen, dass keine Reste des Reinigers im Garraum verbleiben. Zu diesem Zweck ist die Reinigungsflüssigkeit zu entfernen und der Garraum zu spülen. Dieses Verfahren erfordert einen hohen Arbeitsaufwand und benötigt große Mengen an Wasser und Reinigungsmittel, da es die Aufgabe des Nutzers ist, durch sorgfältiges Reinigen aller Ecken eines Garraums eine vollständige Reinigung herbeizuführen, um den Hygieneanforderungen einer Großküche bzw. in der Gastronomie Rechnung zu tragen.

Da in der Regel die am meisten verschmutzte Fläche des Garraums dessen Boden ist, wird vorzugsweise für dessen Reinigung eine entsprechende Waschflotte bestehend aus Reinigungsmittel und Wasser eingebracht. Diese Waschflotte wirkt sodann über einen gewissen Zeitraum auf die vorhandenen Verschmutzungen ein.

Die Qualität und Intensität der Reinigung hängt somit von dem Engagement des Nutzers und seinem Geschick ab, den Garraum in allen Bereichen zu reinigen. Darüber hinaus birgt der mechanische Reinigungsvorgang auch die Gefahr, dass Spritzer in durchaus erheblichen Mengen über den Rand des Tiegels in die Küche dringen, um dort für zusätzliche unerwünschte Verschmutzungen sorgen.

Aus der DE 101 34 005 A1 ist ein Gargerät zur Behandlung von Nahrungsmitteln bekannt, mit einem Tiegel, der eine Vorderwand, eine Rückwand, zwei Seitenwände und einen Boden aufweist, wodurch ein Innenraum gebildet wird, der als Garraum dient. Ein Deckel dient zum Verschließen des Garraums und das Gargerät weist weiterhin einen Ablauf auf, der im Boden des Tiegels ausgebildet und verschließbar ist, zum wahlweisen Abführen, insbesondere von Flüssigkeit, aus dem Garraum. Das gattungsgemäße Gargerät der DE 101 34 005 A1 weist eine Hochdruck-Reinigungseinrichtung auf, die zur Reinigung des Garraums des Tiegels dient, wobei die Reinigungseinrichtung mit einer Zufuhreinrichtung für eine Flüssigkeit zum Einbringen unter Hochdruck in den Garraum verbunden ist und eine Mehrzahl von Sprühdüsen zur Einbringung der Flüssigkeit in den Garraum aufweist.

Die Sprühdüsen sind nebeneinander an einem drehbaren Balken angeordnet, der um eine Achse drehbar in dem Garraum angeordnet ist. Der Balken der Sprühdüsen ist im Wesentlichen auf halber Höhe des Garraums angeordnet, wobei die nebeneinander angeordneten Sprühdüsen nach unten in Richtung Boden des Garraums gerichtet sind, und weitere Sprühdüsen in horizontaler Richtung auf Balkenhöhe sprühen können. Diese Ausgestaltung entspricht allgemein einem Drehsprinkler. Der balkenförmige Drehsprinkler ist horizontal angeordnet und kann sich um eine vertikale Achse drehen. Die Sprühdüsen sind einerseits in Richtung Boden bzw. an den Stirnseiten des Balkens in Richtung Seitenwände gerichtet. Wie ersichtlich kann im Betrieb des Sprinklers der obere Bereich des Tiegels und insbesondere auch die Unterseite des Deckels von den Sprühdüsen nicht erreicht werden, weil diese darauf nicht gerichtet sind.

Gemäß DE 101 34 005 A1 wird für den Reinigungsvorgang eine zirkulierende Reinigungsflotte über den Drehsprinkler verteilt, die mittels einer Umwälzpumpe aus dem Tiegel abgezogen und umgewälzt wird. In dieser Waschflotte befinden sich Reinigungsmittel, Spülmittel, Entkalker, also Flüssigkeiten mit Zusätzen, die auch pulverförmiger Natur sein können, wobei all diese Mittel über den Drehsprinkler versprüht werden können müssen. Zwar wird angegeben, dass auch Wasser eingebracht wird, dies geschieht jedoch nicht allein, sondern als ein Gemisch aus Wasser und Reinigerflüssigkeit. Beim ersten Zuführen ist die Hochdruckpumpe auch ausgeschaltet, d.h. es findet beim Einfüllen des Gemisches aus Wasser und Reinigerflüssigkeit keine Besprühung des Innenraums des Tiegels statt. Hat die Waschflotte im Tiegel einen gewissen Flüssigkeitsstand erreicht, wird in einem Umwälzsystem über die Hochdruckpumpe die Waschflotte dem Drehsprinkler wieder zugeführt und es kommt zu einer Zirkulation der Reinigungsflotte ausschließlich im Sinne einer Umwälzung.

In der Reinigungsflotte können auch Partikel aufgrund der Reinigungsmittel vorhanden sein, so dass die Sprühdüsen eine bestimmte Durchgangsöffnungsgröße aufweisen müssen, um nicht zu verstopfen.

Ein wesentlicher Nachteil bei der Reinigungsvorrichtung des Gargeräts dieses Standes der Technik ist also, dass der Drehsprinkler über seine Sprühdüsen nur einen begrenzten Bereich des Garraums erreicht, wodurch der zu reinigende Garraum nur teilweise mit Reinigungsflüssigkeit besprüht werden kann, insbesondere der Deckel keinerlei Reinigung erfährt und ein Abtragen von Verschmutzungen durch einfaches Besprühen der Flächen zu keinem ausreichenden Reinigungsergebnis führt.

Der vorliegenden Erfindung liegt deshalb die Aufgabe zugrunde, ein Verfahren zur vollständigen, intensiven und zufriedenstellenden Reinigung des Garraums eines Gargeräts mit einem Tiegel zu schaffen. Weiterhin liegt der vorliegenden Erfindung die Aufgabe zugrunde ein Gargerät mit einem Tiegel und einer Reinigungseinrichtung zu schaffen, mittels derer eine zuverlässige und vollständige Reinigung, insbesondere ohne weitere mechanische Bearbeitungen durch den Nutzer erreicht wird.

Diese Aufgaben werden durch die Merkmale der Ansprüche 1 bzw. 6 gelöst.

Das erfindungsgemäße Verfahren zeichnet sich dadurch aus, dass nach Einbringen eines Reinigungsmittels in den Garraum und gegebenenfalls nach dessen zeitlicher Einwirkung, mittels des aus jeder Sprühdüse unter Hochdruck aus dem Sprühkopf der Reinigungseinrichtung eingebrachten Flüssigkeitsstrahls, der ausschließlich aus Wasser gebildet ist und der das Reinigungsmittel verwirbelt bzw. verspritzt, und gegebenenfalls nach weiterer zeitlicher Einwirkung des verspritzten Reinigungsmittels, die Verschmutzungen von dem Boden, den Wänden und der Innenseite des Deckels mechanisch abgetragen und anschließend, zusammen mit der Waschflotte, über den Ablauf aus dem Gargerät abgeführt werden, wobei die Mehrzahl der Sprühdüsen an einem Drehumfang im Wesentlichen gleichmäßig verteilt angeordnet sind und sich um eine Achse drehen, die senkrecht zu einer Achse verläuft, um die sich der Sprühkopf, der die Sprühdüsen trägt, dreht.

Dadurch wird erreicht, dass Reinigungsmittel im Garraum ohne Einwirkung des Nutzers verteilt wird, was somit eine bisher nicht gekannte automatische Reinigung des Garraums schafft, mittels der auch hartnäckige Verschmutzungen entfernt werden können.

Dies führt vorteilhafter Weise zu einer vollständigen und im Wesentlichen automatisierten Reinigung des Garraums, mit dem weiteren Vorteil eines gesicherten Reinigungsergebnisses und ohne einer Abhängigkeit vom Reinigungsengagement des Nutzers.

Das erfindungsgemäße Verfahren zum Reinigen des Garraums eines Gargeräts mit einem Tiegel weist vorteilhafter Weise die folgenden Schritte auf:
a) Verschließen des Ablaufs aus dem Garraum des Tiegels,
b) Einfüllen des Reinigungsmittels in den Garraum,
c) Verschließen des Deckels,
d) Einbringen von Flüssigkeit aus dem Sprühkopf der Reinigungseinrichtung in den Garraum,
e) Auflösen des Reinigungsmittels und Durchmischen von Reinigungsmittel und Flüssigkeit zum Bilden einer Waschflotte auf dem Boden des Garraums des Tiegels,
f) Verteilen der so gebildeten Waschflotte in dem Garraum mittels des unter Hochdruck aus dem Sprühkopf der Reinigungseinrichtung aus jeder Sprühdüse eingebrachten Flüssigkeitsstrahls,
g) Einwirkenlassen der verteilten Waschflotte auf die Verschmutzungen im Garraum,
h) Öffnen des Ablaufs, und
i) Abtragen der angelösten Verschmutzungen mittels der Flüssigkeitsstrahlen aus dem Sprühkopf.

Das Durchmischen erfolgt bei einem Flüssigreiniger im Wesentlichen nicht notwendig, da er sich direkt auflöst. Bei Reinigungspulver oder -tabs werden diese durch den harten Hochdruckstrahl mechanisch aufgelöst. Der harte Strahl erzwingt eine Durchmischung.

Vorteilhafter Weise wird im Anschluss an den Schritt i) folgender Schritt durchgeführt: Klarspülen, insbesondere durch Beaufschlagen der Wandungen des Garraums mit Frischwasser über eine vorgegebenen Zeitspanne. Dies führt vorteilhafter Weise zum vollständigen Abführen des Reinigungsmittels mit den abgelösten Verschmutzungen und zum besonders sicheren Reinigungsergebnis der geforderten Reinigung des Garraums.

Weiterhin ist vorteilhaft, dass der oben angegebene Schritt f) und der oben angegebene Schritt g) der erfindungsgemäßen Verfahrens mehrfach aufeinanderfolgend wiederholt werden, je nach Verschmutzungsgrad des Garraums, was programmgesteuert erfolgen kann. So weiß der erfahrene Bediener, welche Reinigungsschritte er abhängig vom Verschmutzungsgrad wiederholt vorprogrammieren muss, um das gewünschte Reinigungsergebnis zu erzielen.

Durch den Hochdruckstrahl aus den Sprühdüsen wird die Waschflotte, wie bereits erwähnt, verwirbelt bzw. verspritzt, wobei besonders vorteilhaft der Strahl aus dem Sprühkopf der Reinigungsanordnung so gestaltet wird, dass er die Waschflotte wellenartig gegen die Wände des Garraums und den Deckel schiebt und hebt. Er schiebt die Waschflotte quasi aus dem Bodenbereich vor sich her, und schleudert sie an die Wände und den Deckel des Garraums, was durch den erheblichen Druck der Flüssigkeitsstrahlen ermöglicht wird.

Das erfindungsgemäße Gargerät zeichnet sich erfindungsgemäß dadurch aus, dass das Gargerät in der Lage ist das Verfahren nach einem der Ansprüche 1 bis 5 auszuführen, wobei die Reinigungseinrichtung in der Lage ist, ein in den Garraum eingebrachtes Reinigungsmittel mittels der unter Hochdruck eingeführten ausschließlich aus Wasser bestehenden Flüssigkeit im Garraum zu verwirbeln bzw. zu verspritzen, wobei das Einführen der Flüssigkeit durch die Mehrzahl von Sprühdüsen, die an einem Drehumfang im Wesentlichen gleichmäßig verteilt angeordnet sind und sich um eine Achse drehen, die senkrecht zu einer Achse verläuft, um die sich der Sprühkopf, der die Sprühdüsen trägt, dreht, in Form eines harten Hochdruckstrahls aus jeder Sprühdüse erfolgt.

Die über den Sprühkopf der Reinigungseinrichtung eingeführte Flüssigkeit ist ausschließlich Wasser, das sich für die Hochdruck-Reinigung besonders eignet, wohingegen Reinigungsmittel, insbesondere aggresive chemische Reinigungsmittel, für eine Anwendung unter hohen Drücken nicht geeignet sind. Milde Reinigunsmittel sind jedoch für die auftretende Verschmutzung im Garraum nicht geeignet, da ihre Reinigungswirkung nicht ausreichend ist. Aggresive oder alkalische oder pulverförmige bzw. nicht vollständig aufgelöste pulverförmige Reinigungsmittel sind ebenfalls ungeeignet, einer Hochdruckpumpe zugeführt zu werden. Die Gründe hierfür sind Korrosion oder Verstopfung der Sprühdüsen.

Durch das Vermeiden des Zusetzens des Reinigungsmittels zur strömenden Hochdruckflüssigkeit wird somit vorteilhafter Weise erreicht, das die für das Reinigungsmittel eingesetzten Chemikalien keine unerwünschten Wechselwirkungen mit den Leitungselementen des strömenden Mediums aufweisen, also insbesondere nicht mit Dichtungs- und Isolierstoffen reagieren oder auf diese erodierend einwirken. Komponenten der Reinigungseinrichtung werden dadurch nicht angegriffen und ein Verstopfen der Sprühdüsen im Sprühkopf der Reinigungsvorrichtung durch entsprechende Reinigungsmittel kann vermieden werden.

Durch das Einspritzen unter Hochdruck des Wassers in die Waschflotte, kann eine Benetzung aller Flächen des Garraums mit der Waschflotte erreicht werden, wodurch eine effektive Reinigung nicht nur durch Hochdruckbesprühung mittels Wasser, sondern auch unter zusätzlicher chemischer Reinigung der Flächen erreicht wird. Unter dem Begriff Einspritzen unter Hochdruck wird gemäß vorliegender Erfindung ein Einspritzen der Flüssigkeit unter einem Druck von bis zu 160 bar verstanden. Der an den Sprühdüsen austretende Flüssigkeitsstrahl hat eine Geschwindigkeit von bis zu 580 Km/h.

Die Reinigung kann erfindungsgemäß ohne mechanische Einwirkung des Nutzers vorteilhafterweise automatisch erfolgen.

Vorteilhafterweise ist das Reinigungsmittel als Konzentrat in flüssiger Form oder in Form einer Kartusche oder eines Tabs ausgebildet.

Vorteilhafterweise bildet das in den Garraum eingebrachte Reinigungsmittel mit der darin befindlichen Flüssigkeit oder mit anschließend eingebrachter Flüssigkeit eine Waschflotte, die durch die Hochdruck-Reinigungseinrichtung im Garraum verwirbelt bzw. verspritzt wird.

Weiterhin ist vorteilhaft, dass die Reinigungseinrichtung einen drehbaren Sprühkopf mit einer Mehrzahl von Düsenöffnungen aufweist, der als Orbitalkopf ausgebildet ist. Unter Orbitalkopf wird ein Zielstrahlkopf verstanden, bei dem zwei sich überlagernde Drehbewegungen erzeugt werden. An einem Drehumfang sind im Wesentlichen gleichmäßig verteilte Sprühdüsen angeordnet, die sich um eine Achse drehen, die senkrecht zu einer Achse verläuft, um die sich der Sprühkopf, der die Sprühdüsen trägt, dreht. Die beiden Drehbewegungen können mittels Getriebe in eine abhängige Drehbewegung versetzt werden.

Weiterhin ist vorteilhaft, dass die Reinigungseinrichtung eine abnehmbare, den drehbaren Sprühkopf tragende, im Garraum in der Wandung des Tiegels befestigbare Reinigungslanze aufweist. Mithilfe der Lanze kann vorteilhafter Weise der Sprühkopf so im Garraum angeordnet werden, dass er die gesamte Innenfläche des Garraums also Boden, Seitenwände und Deckelinnenfläche mit den aus den Sprühdüsen ausgebrachten Flüssigkeitsstrahlen überstreicht.

Hierzu ist der Sprühkopf vorteilhafter Weise in der oberen Hälfte des Garraums, insbesondere etwa in einem Abstand von einem Sechstel bis einem Drittel der Höhe der Rückwand unterhalb des Deckels und im Wesentlichen mittig zwischen den Seitenwänden angeordnet.

Weiterhin ist vorteilhaft, dass die Heizung des Garraums zur Aufheizung der Waschflotte vor, während und/oder nach der Benetzungsphase in Betrieb gesetzt wird. In der Regel erhöht sich beispielsweise die Fettlöslichkeit der Verschmutzungen bei erhöhter Temperatur. Weiterhin hat sich als vorteilhaft ergeben, dass die Waschflotte zu Beginn der Benetzung eine Höhe von mindestens 5 mm besitzt. Dadurch wird ausreichend Flüssigkeit vorgesehen, die mittels der aus dem Sprühkopf ausgebrachten Flüssigkeitsstrahlen im Garraum verspritzt bzw. verwirbelt werden kann und damit alle Innenflächen des Garraums benetzen kann.

Insgesamt ergibt sich somit, dass die chemische Komponente des Reinigungsmittels in höchst effizienter und synergistischer Form mit der mechanischen Komponente der Sprühstrahlen zusammenwirkt. Die mit Hochdruck auf den Boden und die Wandung des Garraums auftreffenden Wasserstrahlen führen sowohl zu einem Verwirbeln bzw. Verspritzen einer im Garraum befindlichen Waschflotte und Benetzen der Innenflächen des Garraums als auch zu einem mechanischen Abtragen der Verschmutzungen und der Waschflotte an den Innenflächen des Garraums und erfüllen somit eine Doppelfunktion.

Vorteilhafter Weise kann die Heizung des Garraums zusätzlich für einen Trocknungsvorgang nach der Reinigung eingesetzt werden, wodurch Feuchtigkeitsreste verdampft werden können.

Durch das erfindungsgemäße Verfahren wird durch das gezielte Einwirkenlassen des Reinigungsmittels zunächst auf den besonders verschmutzen Boden des Garraums und anschließend auf die Seitenwände und den Deckel, wobei gegebenenfalls auch eine Erwärmung des Reinigungsmittels bzw. der Waschflotte erfolgt, eine intensive hygienische Komplettreinigung erreicht, wodurch das Gargerät stets in einen vollkommenen und allen hygienischen Anforderungen entsprechenden Zustand und, besonders vorteilhaft, automatisch versetzt werden kann. Dies hat den Vorteil, dass nach Betrieb in der Großküche, Kantine oder Gastronomie, der Reinigungsvorgang sogar von einem Hilfspersonal durchgeführt werden kann und zu einem zuverlässigen Reinigungsergebnis führt.

Weitere Vorteile der vorliegenden Erfindung können sich aus dem Folgenden ergeben.

Es können einer oder mehrere Sensoren im Garraum angeordnet sein, und dies bevorzugt an den für den Reinigungsvorgang kritischen Stellen, wodurch eine Beurteilung des Reinigungsvorganges an den kritischen Stellen auch von außen ermöglicht wird.

Die Sensoren können insbesondere optische Sensoren sein, mittels denen die Bedienungsperson das Reinigungsergebnis überprüfen und gegebenenfalls weitere Reinigungsschritte in Gang setzen kann.

Beispielsweise kann eine Kamera eingesetzt werden, die zugleich auch während des Garvorgangs eingesetzt werden kann, um Daten, etwa zur Siedestärke, zu ermitteln und dem Nutzer des Gargeräts zu liefern. Eine derartige Kamera bzw. optische Sensoren können derart ausgelegt sein, dass sie während des Reinigungsvorganges einschätzen können, ob und gegebenenfalls welche Schmutzreste bzw. Nahrungsmittelreste sich noch an einer kritischen Stelle des Garraums befinden und kann dieses Ergebnis auf die Reinigungsprozesssteuerung übertragen und von dieser genutzt werden, beispielsweise über eine Gerätesteuerung. Dies kann vorteilhafter Weise zu einer Optimierung der Reinigungszeit sowie auch der Energiebilanz des Wasserverbrauchs und auch des Reinigungsmittelverbrauchs führen.

Weitere Einzelheiten, Merkmale und Vorteile der vorliegenden Erfindung ergeben sich aus der nachfolgenden Beschreibung der Zeichnungen eines Ausführungsbeispiels der vorliegenden Erfindung. Es zeigen:
- Fig. 1: eine perspektivische Darstellung einer Ausführungsform eines erfindungsgemäßen Gargeräts;
- Fig. 2: einen Schnitt durch die in Fig. 1 dargestellte Ausführungsform des erfindungsgemäßen Gargeräts;
- Fig. 3: in vergrößerter Darstellung die Reinigungseinrichtung des erfindungsgemäßen Gargeräts;
- Fig. 4: eine perspektivische Darstellung der Reinigungseinrichtung der vorliegenden Erfindung und deren Antrieb; und
- Fig. 5: ein Flussdiagramm mit einer schematischen Darstellung einer Ausführungsform des erfindungsgemäßen Verfahrens.

In den Figuren sind gleiche Elemente der Ausführungsformen mit gleichen Bezugsziffern bezeichnet.

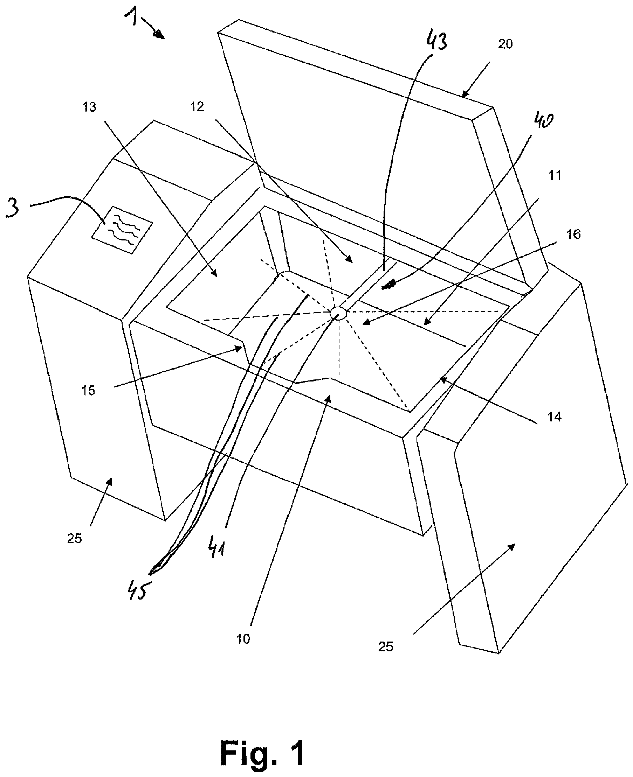

In Fig. 1 ist ein erfindungsgemäßes Gargerät 1 in perspektivischer Darstellung von rechts oben dargestellt. Das erfindungsgemäße Gargerät 1 weist eine Tiegel 10 auf, der wannenförmig oder pfannenförmig ausgebildet ist. Abgesehen davon, dass der Tiegel 10 unterschiedliche Formen aufweisen kann, wie beispielsweise halbkugelförmig nach Art eines Wok, oder kreiszylinderförmig, ist der in Fig. 1 dargestellte Tiegel 10 quaderförmig ausgebildet.

Der Tiegel 10 des erfindungsgemäßen Gargeräts 1 weist einen weitgehend flachen oder leicht geneigten Boden 11 auf, von dem aus sich eine Wandung nach oben erstreckt. Die Wandung umfasst eine Vorderwand 15, eine Rückwand 12 und diesen Wänden gegenüber kürzere Seitenwände 13 und 14 auf.

Die Wandung mit den einzelnen Wänden 12, 13, 14 und 15 und der nach unten diese verbindenden Boden 11 umschließen einen Innenraum, der in dem Gargerät 1 den Garraum 16 bildet.

In den Wänden 12, 13, 14 und 15 und/oder in dem Boden 11 können Heizelemente (nicht dargestellt) angeordnet sein, die den Garraum 16 und seinen entsprechenden Inhalt erwärmen können.

Aufgrund der Wannen-, Pfannen- oder Tiegelform eignet sich das Gargerät 1 insbesondere dazu, in dem Garraum 16 flüssige Speisen wie etwa Suppen, sämige oder cremige Speisen, wie etwa Gulasch, oder auch schütt- und rieselfähige Nahrungsmittel wie Reis, Nudeln oder Erbsen zuzubereiten. Ebenso können in dem Garraum 16 aber auch Speisen wie beispielsweise Rühreier zubereitet werden.

Nach oben ist der Garraum 16 durch einen Deckel 20 verschließbar. Dieser Deckel 20 wird üblicherweise und insbesondere auch in der dargestellten Ausführungsform mit einem Gelenk an der Oberkante der Rückwand 12 angelenkt und kann somit auf- und zugeklappt werden, um geöffnet und geschlossen zu werden.

Bei geschlossenem Deckel 20 wird insbesondere vorteilhafterweise ein Garen im Garraum 16 unter erhöhtem Druck ermöglicht, was eine schnelles Garen der darin befindlichen Nahrungsmittel ermöglicht.

Darüber hinaus kann in dem in Fig. 1 dargestellten Tiegel 10 auch ein Braten oder Frittieren von Nahrungsmitteln erfolgen, wenn der Boden 11 entsprechend beheizt wird. Fig. 1 zeigt den Deckel 20 in geöffnetem Zustand.

Der Tiegel 10 ist schwenkbeweglich in Rahmenelementen 25 gelagert, wobei das Gargerät mittels einer Bedienfläche 3 gesteuert werden kann, mittels derer Befehle zu einer entsprechenden Steuereinrichtung eingegeben werden können, die wiederum über entsprechende Einrichtungen die vorhandenen Einrichtungen des Gargeräts, wie Heizeinrichtungen, Bewegungseinrichtungen des Deckels 20, Kippeinrichtungen des Tiegels etc. steuert.

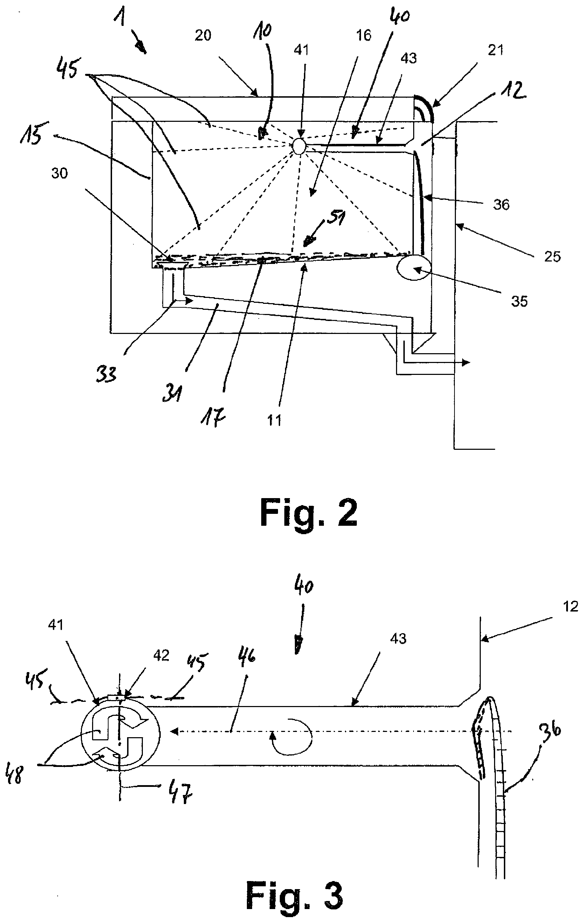

Wie weiterhin aus Fig. 1 ersichtlich, ist nur schematisch eine Reinigungseinrichtung 40 dargestellt, die eine Reinigungslanze 43 aufweist, die auf abnehmbare Weise an der Rückwand 12 des Garraums 16 angeordnet ist. Am vorderen Ende der Reinigungslanze 43 weist die Reinigungseinrichtung 40 einen Sprühkopf 41 auf, der bevorzugt als Orbitalkopf ausgebildet ist, wie das näher unter Bezugnahme auf Fig. 3 erläutert werden wird. Der Sprühkopf 41 ist in Betrieb in der Lage, Hochdruck-Flüssigkeitsstrahlen 45 auszusenden, die zum Reinigen des Garraums 16 dienen.

In Fig. 2 ist das Gargerät 1 in schematischer Schnittansicht (ohne Schnittschraffur) dargestellt. Das erfindungsgemäße Gargerät 1 ist mit geschlossenem Deckel 20 dargestellt und die Reinigungseinrichtung 40 befindet sich in Betrieb.

Wie aus Fig. 2 ersichtlich, ist der Boden 11 des Garraums 16 nach links leicht schräg geneigt, so dass sich am Boden 11 ansammelnde Flüssigkeit in Richtung Ablauf 30 fließen kann, wobei über ein entsprechendes Ablaufrohr 31 gemäß Pfeil 33 Flüssigkeit aus dem Gargerät 1 abgeführt werden kann. Der schematisch dargestellte Ablauf 30 weist auf der Ebene des Bodens 11 Öffnungen auf, durch die Flüssigkeit in das Ablaufrohr 1 abfließen kann.

Lediglich angedeutet in Fig. 2 ist ein Scharnier oder Gelenk 21, welches das Aufklappen und Verschließen des Deckels 20 auf dem Tiegel 10, in dem der Garraum 16 ausgebildet ist, ermöglicht.

Wie weiterhin aus Fig. 2 ersichtlich, führt das Ablaufrohr 31 vom Ablauf 30 nach rechts unten zu dem Rahmen 25, von wo aus abgeführte Flüssigkeit entsorgt werden kann.

Wie auch weiterhin aus Fig. 2 ersichtlich, ist für das Reinigen des Garraums 16 nach der Zubereitung von Speisen eine Reinigungseinrichtung 40 vorgesehen, die abnehmbar an der Rückwand 12 an eine entsprechende Zufuhrleitung (nicht dargestellt), anschließbar ist. Durch Zuführung von Flüssigkeit, insbesondere Wasser zu der Reinigungseinrichtung 40 über die Lanze 43 zu dem Sprühkopf 41 wird die Flüssigkeit im Garraum unter Hochdruck versprüht und dient zur Reinigung der Wandungen, des Bodens 11 und der Innenfläche des Deckels 20, um anhaftende Reste, wie Wrasen, Fett und Speisereste und dergleichen zu lösen, abzuspülen und über den Ablauf 30 abzuführen.

Wie aus Fig. 3 ersichtlich, weist die Reinigungseinrichtung 40 den Sprühkopf 41 an der Reinigungslanze 43 auf, wobei sich der Sprühkopf 41 um die Achse 46 der Lanze 43 drehen kann. Wie in Fig. 3 gezeigt, ist der Sprühkopf 41 als Orbitalkopf ausgebildet, welcher sich einerseits um die Drehachse 46 dreht und andererseits Sprühdüsen 42 aufweist, die sich um die Achse 47 gemäß den Pfeilen 48, zur Erzeugung der Flüssigkeitsstrahlen 45, drehen.

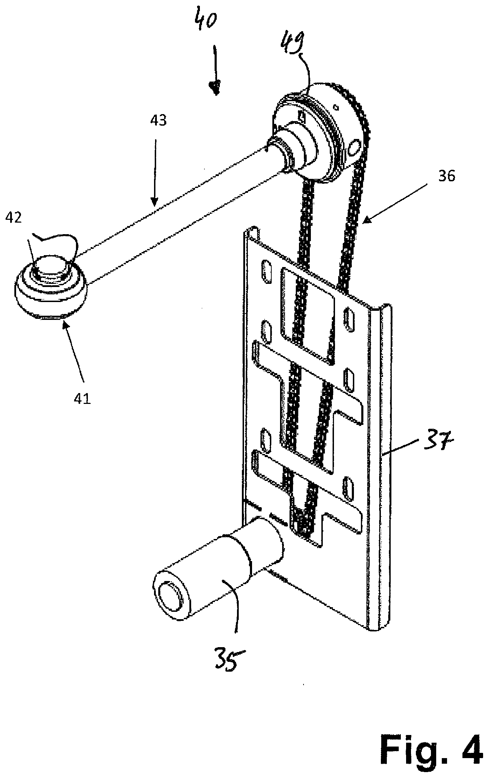

In der Ausführungsform gemäß Fig. 3 wird die Drehung des Sprühkopfs 41 mittels eines über eine Kette 36 in Drehung versetzten Innenrohrs (nicht dargestellt) angetrieben, wie es noch deutlicher aus Fig. 4 hervorgeht.

Wie aus Fig. 4 hervorgeht, wird mittels eines Motors 35 die Antriebskette 36 angetrieben, welche ihrerseits das Innenrohr (nicht dargestellt) der Lanze 43 in Drehung versetzt, wodurch der Sprühkopf 41 um die Drehachse der Lanze 43 gedreht wird.

Über ein Kegelgetriebe werden die um 90° versetzten Sprühdüsen 42, im Beispielsfalle vier Stück, in Drehung versetzt, so dass sich eine kombinierte Drehbewegung der Sprühdüsen 42 ergibt, die durch die Zwangsführung über ein Kegelradgetriebe einen Freiheitsgrad aufweist. Ein Beispiel einer Lagesicherung des Motors 35 und der Antriebskette 36 mittels einer Lagerplatte 37 zeigt Fig. 4.

Die Lanze 43 der Reinigungseinrichtung 40 ist mit einer Kupplung 49 verbunden, die auch die Zufuhrleitung (nicht dargestellt) anbindet, mit der die Flüssigkeit in die Reinigungseinrichtung 40 durch die Rückwand 12 in die Lanze 43 und dort zum drehbaren Sprühkopf 41 geführt wird.

Gegebenenfalls kann die Zufuhrleitung mit einem Flüssigkeitsreservoir in Verbindung stehen.

Die Lanze 43 ist mittig in der Rückwand 12 zwischen den Seitenwänden 13 und 14 und weiterhin mit einem Abstand von der Oberseite des Garraums angeordnet, die im Wesentlichen in einem Bereich zwischen einem Sechstel und einem Drittel der Höhe der Rückwand 12 unterhalb des Deckels 20 entspricht.

Wie aus Fig. 4 ersichtlich, in der eine Ausführungsform der Erfindung dargestellt ist, wird die Drehung des Sprühkopfes 41 durch den Motor 35 erzeugt, der über die Antriebskette 36 eine Kraft ausübt, die über eine Innenwelle in der Lanze 43 den Sprühkopf 41 in Drehung versetzt.

Alternativ kann durch die mit Hochdruck durch die Rückwand 12 in die Lanze 43 geförderte Flüssigkeit, mittels dieses Drucks der strömenden Flüssigkeit, eine mechanische Kraft auf den drehbaren Kopf 41 ausgeübt werden. Dadurch wird der Kopf 41 in Drehung versetzt und die aus den Sprühdüsen 42 heraustretende Flüssigkeit wird in Bahnen auf die Wände 12, 13, 14, 15, den Boden 11 und die Unterseite des Deckels 20 gesprüht.

Bei Orbitalköpfen ist es möglich, den genauen Verlauf der Bahnen der Sprühstrahler so zu legen, dass diese jeweils dicht aneinander und nacheinander passiert werden, so dass praktisch die gesamte überstreichbare Fläche des Garraums gleichmäßig überstrichen wird.

Dabei ist es möglich, mittels eines Sensors die aktuelle Position des Strahls der Flüssigkeit zu erkennen. Diese Erkennung kann wiederum eine Steuerung automatisch generieren, dass weiter vom Zentrum entfernte Flächenbereiche des Garraums zeitlich länger mit dem Hochdruckstrahl der Flüssigkeit beauftragt werden, um die entsprechende Reinigungswirkung zu erzeugen.

Die Reinigungslanze 43 wird während des Behandlungsvorgangs von Nahrungsmitteln aus der Rückwand 12 entnommen und durch einen Blindstopfen (nicht dargestellt) ersetzt.

Bevorzugt wird eine werkzeuglose Befestigung der Reinigungslanze 43 in der vorgesehenen Öffnung in der Rückwand 12 vorgenommen, beispielsweise in einer bajonettartigen Verbindung der Lanze 43 mit der Rückwand 12.

Erneut Bezug nehmend auf Fig. 2 ist ein Reinigungsmittel 51 in den Garraum 16 eingebracht, und bildet mit der über die Flüssigkeitsstrahlen 45 eingebrachte Flüssigkeit eine Waschflotte 17. Während des Reinigungsvorgangs ist der Ablauf 30 geschlossen. Die unter Hochdruck eingebrachten Flüssigkeitsstrahlen 45 erzeugen eine Verwirbelung bzw. ein Verspritzen der Waschflotte 17 im gesamten Garraum 16, wobei der Reinigungsvorgang thermisch, bzw. durch die Heizung des Garraums unterstützt werden kann.

Wie sich herausgestellt hat, wird durch das bahnweise Überstrechen des mit der Waschflotte 17 bedeckten Bodens des Garraums 16 durch den aus dem Sprühkopf 41 mit Hochdruck austretenden Flüssigkeitsstrahlen 45 eine sehr gleichmäßige und schaufelförmige Überstreichung der gewünschten Passagen der Wandung mit der Waschflotte 17 erreicht, was zu einer äußerst effektiven Reinigung führt.

Dabei kann auch eine Steuerung der Wasserzufuhr zum Sprühkopf 41 oder auch eine spezielle Bewegungssteuerung des Sprühkopfes 41 dazu genutzt werden, bestimmte Bereiche der Wandung stärker oder schwächer zu benetzen und mit Hochdruck zu beaufschlagen, um etwa eine längere Einwirkzeit der aufgetragenen Flüssigkeit zu erzielen. Dabei hängt die Zeit der Wasserzufuhr vom eingebrachten Volumenstrom ab. Bei kleinem Volumenstrom wird die Wasserzufuhr länger vorgenommen werden als bei großem Volumenstrom.

Nach einem kurzen Zeitraum für eine Benetzung von größenordnungsmäßig etwa 20 bis 40 Sekunden bis einer Minute, was vom eingesetzten Volumenstrom abhängt, wird die weitere Benetzung von Flüssigkeit aus dem Sprühkopf 41 der Reinigungseinrichtung 40 mit Hockdruck abgeschaltet. Die Waschflotte 17 kann nun einwirken und die Verschmutzungen lösen, wobei dieser Vorgang beispielsweise für ca. 10 bis 15 Minuten angesetzt werden kann.

Das Anlösen der Verschmutzungen kann durch das Aufheizen des Garraums 16 unterstützt werden. Weiterhin kann in einer Ausführungsform das Anlösen mit dem aufgeheizten Garraum 16 durch eine entsprechend hohe Luftfeuchtigkeit im Garraum 16 effektiv unterstützt werden.

Gemäß der vorliegenden Erfindung ist es möglich, insbesondere die Schritte des Verteilens der Waschflotte 17 und des anschließenden Einwirkens ein- oder mehrfach zu wiederholen.

Schließlich wird der Ablauf 30 des Garraums geöffnet. Danach wird die Zufuhr von Flüssigkeit unter Hochdruck aus dem Sprühkopf wieder aufgenommen. Mit diesem Schritt werden dann die angelösten Verschmutzungen bzw. Verunreinigungen endgültig effektiv abgetragen und über den Ablauf 30 aus dem Garraum 16 hinausgespült.

Der Strahl aus den Sprühdüsen 42 des Sprühkopfes 41 kann schließlich auch zu Klarspülung eingesetzt werden, nachdem die benutzte Waschflotte 17 über den Ablauf 30 abgeflossen ist.

Unter dem Begriff Hochdruck-Reinigungseinrichtung wird eine Hochdruckreinigung verstanden, bei der ein Flüssigkeitsstrahl mit einem Druck von bis zu 160 bar entsprechend 16 MPa die Sprühdüsen 42 verlässt und in Richtung Innenfläche des Garraums schießt. Derartige Hochdruck-Reinigungseinrichtungen sind aus dem Stand der Technik bisher unbekannt. Mit Hilfe dieses Hochdrucks, der eine enorme Geschwindigkeit der austretenden Flüssigkeitsstrahlen erzeugt, kann die "mechanische" Reinigung der Oberflächen des Garraums wirksam durchgeführt werden.

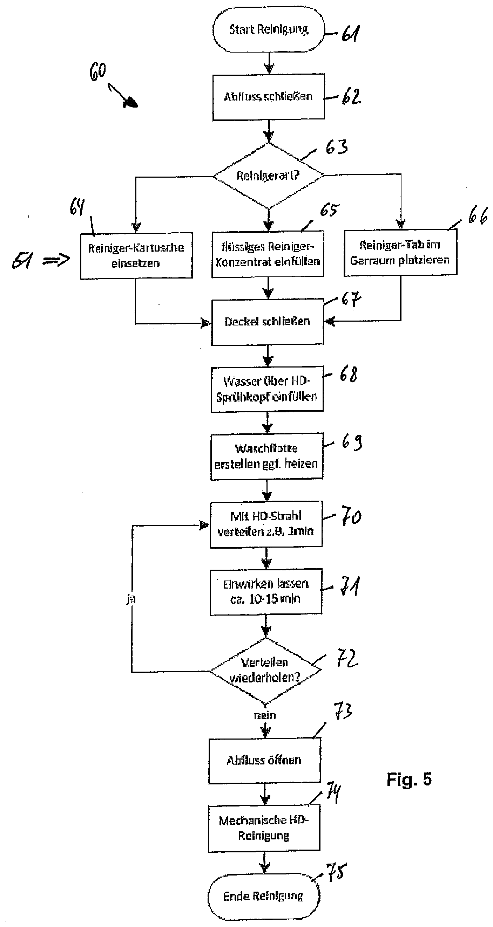

Es wird nunmehr Bezug genommen auf Fig. 5, in der schematisch ein Flussdiagramm mit den Verfahrensschritten dargestellt ist, die bei einer bevorzugten Ausführungsform des erfindungsgemäßen Verfahrens durchgeführt werden.

Gemäß Flussdiagramm 60 wird in einem Schritt 61 die Reinigung gestartet. Als erstes wird in einem Schritt 62 der Abfluss 30 geschlossen. Danach hat der Nutzer in einem Schritt 63 zu entscheiden, ob er gemäß Schritt 64 eine Reinigerkartusche einsetzen, gemäß Schritt 65 ein flüssiges Reinigungskonzentrat einfüllen, oder gemäß Schritt 66 ein Reinigertab im Garraum platzieren will.

Nachdem er die Auswahl getroffen hat und das Reinigungsmittel 51 ausgewählt und im Garraum platziert hat, wird der Deckel im Schritt 67 geschlossen. Es wird Wasser über den Hochdrucksprühkopf 41 gemäß Schritt 68 eingefüllt und die Waschflotte 17 im Schritt 69 erstellt, wobei gegebenenfalls die Waschflotte 17 aufgeheizt wird.

In einem Schritt 70 wird mittels des Hochdruckreinigungsstrahls die Waschflotte verwirbelt bzw. verspritzt und so an den Innenwänden des Garraums verteilt. Danach wird in einem Schritt 71 ein Einwirken der Waschflotte auf die Innenwände über einen vorbestimmten Zeitraum vorgenommen.

Durch Kontrollieren des Garraums, entweder durch Inaugenscheinnahme des Benutzers oder durch vorgesehene optische Sensoren, kann in einem Schritt 72 entschieden werden, ob ein Verteilen der Waschflotte wiederholt wird oder nicht. Alternativ kann in der Steuerung eine vorbestimmte Anzahl von Wiederholungen hinterlegt sein, die dann entsprechend durchgeführt werden.

Bei negativer Entscheidung, also ausreichender Vorreinigung, wird in einem Schritt 73 der Abfluss 30 geöffnet, wodurch das Reinigungsmedium abfließen kann, woran sich in einem Schritt 74 die mechanische Hochdruckreinigung anschließt. Bei geöffnetem Abfluss 30 fließt dann auch diese eingebrachte Flüssigkeit ab, wodurch die Reinigung vollendet wird, was in einem Schritt 75 angezeigt wird.

Die vorliegende Erfindung ist nicht auf die dargestellten Ausführungsbeispiele begrenzt. So kann beispielsweise ein Abdeckelement vorgesehen sein, das oberhalb des drehbaren Sprühkopfes der Reinigungseinrichtung innerhalb des Garraums 16 für den Reinigungsvorgang verfahrbar ist.

Weiterhin kann eine Vorratseinrichtung für das Reinigungsmittel an dem Abdeckelement vorgesehen sein.

Mit der vorliegenden Erfindung wird somit sowohl ein Gargerät mit einer einfachen und vollautomatisierten Reinigung des Garraums als auch ein entsprechendes Verfahren geschaffen, das dem Benutzer die erwähnten Vorteile verschafft.

### Bezugszeichenliste:

- 1: Gargerät
- 3: Bedienfläche
- 10: Tiegel
- 11: Boden
- 12: Rückwand
- 13: Seitenwand
- 14: Seitenwand
- 15: Vorderwand
- 16: Garraum
- 17: Waschflotte
- 20: Deckel
- 21: Gelenk
- 25: Rahmen
- 30: Ablauf
- 31: Ablaufrohr
- 33: Pfeil
- 35: Motor
- 37: Lagerplatte
- 40: Reinigungseinrichtung
- 41: Sprühkopf
- 42: Sprühdüsen
- 43: Reinigungslanze
- 45: Flüssigkeitsstrahlen
- 46: Achse
- 47: Achse
- 48: Pfeile
- 49: Kupplung
- 51: Reinigungsmittel
- 60: Flussdiagramm
- 61 - 75: Verfahrensschritte

## Patentansprüche

1. Verfahren zum Reinigen von Verschmutzungen eines Garraums (16) eines zur Behandlung von Nahrungsmitteln geeigneten Gargeräts (1), welches
einen Tiegel (10), der eine Innenwandung, vorzugsweise gebildet aus einer Vorderwand (15), einer Rückwand (12), zweier Seitenwänden (13, 14), und einen Boden (11) aufweist, wodurch ein Innenraum gebildet wird, der als Garraum (16) dient,
einen Deckel (20), der zum Verschließen des Garraums (16) dient,
einen Ablauf (30), der im Boden (11) des Tiegels (10) ausgebildet und verschließbar ist, zum wahlweisen Abführen, insbesondere von Flüssigkeit aus dem Garraum (16), und
eine Hochdruck-Reinigungseinrichtung (40) aufweist, die zur Reinigung des Garraums (16) des Tiegels (10) dient, wobei die Reinigungseinrichtung (40) mit einer Zufuhreinrichtung für eine Flüssigkeit zum Einbringen unter Hochdruck in den Garraum (16) verbunden ist, und eine Mehrzahl an einem drehbaren Sprühkopf (41) angeordneten Sprühdüsen (42) zum Einbringen der Flüssigkeit in den Garraum (16) aufweist,
**dadurch gekennzeichnet,**
**dass** nach Einbringen eines Reinigungsmittels (51) in den Garraum (16) und gegebenenfalls nach dessen zeitlicher Einwirkung, mittels des aus jeder Sprühdüse (42) unter Hochdruck aus dem Sprühkopf (41) der Reinigungseinrichtung (40) eingebrachten Flüssigkeitsstrahls, der ausschließlich aus Wasser gebildet ist und der das Reinigungsmittel (51) verwirbelt bzw. verspritzt, und gegebenenfalls nach weiterer zeitlicher Einwirkung des verspritzten Reinigungsmittels (51), die Verschmutzungen von dem Boden (11), den Wänden (12, 13, 14, 15) und der Innenseite des Deckels (20) mechanisch abgetragen und anschließend, zusammen mit der Waschflotte, über den Ablauf (30) aus dem Gargerät abgeführt werden,
wobei die Mehrzahl der Sprühdüsen (42) an einem Drehumfang im Wesentlichen gleichmäßig verteilt angeordnet sind und sich um eine Achse (47) drehen, die senkrecht zu einer Achse (46) verläuft, um die sich der Sprühkopf (41), der die Sprühdüsen (42) trägt, dreht.

2. Verfahren nach Anspruch 1, mit den folgenden Schritten:
a) Verschließen des Ablaufs (30) aus dem Garraum (16) des Tiegels (10),
b) Einfüllen des Reinigungsmittels (51) in den Garraum (16),
c) Verschließen des Deckels (20),
d) Einbringen von Flüssigkeit aus dem Sprühkopf (41) der Reinigungseinrichtung (40) in den Garraum (16),
e) Auflösen des Reinigungsmittels (51) und Durchmischen von Reinigungsmittel (51) und Flüssigkeit zum Bilden einer Waschflotte (17) auf dem Boden (11) des Garraums (16) des Tiegels (10) und Einwirkenlassen,
f) Verteilen der so gebildeten Waschflotte (17) im Garraum (16) mittels des unter Hochdruck aus dem Sprühkopf (41) der Reinigungseinrichtung (40) aus jeder Sprühdüse (42) eingebrachten Flüssigkeitsstrahls (45),
g) Einwirkenlassen der verteilten Waschflotte (17) auf die Verschmutzungen im Garraum (16),
h) Öffnen des Ablaufs (30), und
i) Abtragen der angelösten Verschmutzungen mittels der Flüssigkeitsstrahlen (45) aus dem Sprühkopf (41).

3. Verfahren nach Anspruch 2, **dadurch gekennzeichnet, dass** im Anschluss an den Schritt i) folgender Schritt durchgeführt wird: Klarspülen, insbesondere durch Beaufschlagen der Wandungen des Garraums (16) mit Frischwasser über eine vorgegebene Zeitspanne.

4. Verfahren nach Anspruch 2 oder 3, **dadurch gekennzeichnet, dass** der Schritt f) und der Schritt g) mehrfach aufeinanderfolgend wiederholt wird.

5. Verfahren nach einem der Ansprüche 1 bis 4, **dadurch gekennzeichnet, dass** der Strahl aus jeder Sprühdüse (42) aus dem Sprühkopf (41) der Reinigungseinrichtung (40) so gesteuert wird, dass er die Waschflotte (17) wellenartig gegen die Wände des Garraums (16) und den Deckel (20) hebt.

6. Gargerät (1) zur Behandlung von Nahrungsmitteln, mit einem Tiegel (10), der eine Innenwandung, vorzugsweise gebildet aus einer Vorderwand (15), einer Rückwand (12), zweier Seitenwänden (13, 14), und einen Boden (11) aufweist, wodurch ein Innenraum gebildet wird, der als Garraum (16) dient,
einem Deckel (20), der zum Verschließen des Garraums (16) dient,
einem Ablauf (30), der im Boden (11) des Tiegels (10) ausgebildet und verschließbar ist, zum wahlweisen Abführen, insbesondere von Flüssigkeit aus dem Garraum (16), und
einer Reinigungseinrichtung (40), die zur Reinigung des Garraums (16) des Tiegels (10) dient, wobei die Reinigungseinrichtung (40) mit einer Zufuhreinrichtung für eine Flüssigkeit zum Einbringen in den Garraum (16) verbunden ist, und eine Mehrzahl von Sprühdüsen (42) zum Einbringen der Flüssigkeit in den Garraum (16) aufweist, wobei die Sprühdüsen (42) bewegbar in dem Garraum (16) ausgebildet sind,
wobei die Reinigungseinrichtung (40) eine Hochdruck-Reinigungseinrichtung ist, welche in der Lage ist, die Flüssigkeit unter Hochdruck in den Garraum (16) einzubringen, wobei die Sprühdüsen (42) an einem drehbaren Sprühkopf (41) angeordnet sind,
**dadurch gekennzeichnet,**
**dass** das Gargerät in der Lage ist, das Verfahren nach einem der Ansprüche 1 bis 5 auszuführen,
wobei die Reinigungseinrichtung (40) in der Lage ist, ein in den Garraum (16) eingebrachtes Reinigungsmittel (51) mittels der unter Hochdruck eingeführten ausschließlich aus Wasser bestehenden Flüssigkeit im Garraum (16) zu verwirbeln bzw. zu verspritzen, wobei das Einführen der Flüssigkeit durch die Mehrzahl von Sprühdüsen, die an einem Drehumfang im Wesentlichen gleichmäßig verteilt angeordnet sind und sich um eine Achse (47) drehen, die senkrecht zu einer Achse (46) verläuft, um die sich der Sprühkopf (41), der die Sprühdüsen (42) trägt, dreht, in Form eines harten Hochdruckstrahls aus jeder Sprühdüse (42) erfolgt.

7. Gargerät nach Anspruch 6, **dadurch gekennzeichnet, dass** die Reinigungseinrichtung (40) in der Lage ist, alle Flächen des Garraums (16) zu benetzen.

8. Gargerät nach Anspruch 6 oder 7, **dadurch gekennzeichnet, dass** das Reinigungsmittel (51) als Konzentrat in flüssiger Form oder in Form einer Kartusche oder eines Tabs ausgebildet ist.

9. Gargerät nach einem der Ansprüche 6 bis 8, **dadurch gekennzeichnet, dass** das in den Garraum (16) eingebrachte Reinigungsmittel (51) mit darin befindlicher oder anschließend eingebrachter Flüssigkeit eine Waschflotte (17) bildet, die durch die Hochdruck-Reinigungseinrichtung (40) im Garraum verwirbelt bzw. verspritzt wird.

10. Gargerät nach einem der Ansprüche 6 bis 9, **dadurch gekennzeichnet, dass** die Reinigungseinrichtung (40) eine abnehmbare, den Sprühkopf (41) tragende, im Garraum (16) in der Wandung (12) des Tiegels (10) befestigbare Reinigungslanze (43) aufweist.

11. Gargerät nach einem der Ansprüche 6 bis 10, **dadurch gekennzeichnet, dass** der Sprühkopf (41) in der oberen Hälfte des Garraums (16), insbesondere etwa in einem Abstand von einem Sechstel bis einem Drittel der Höhe der Rückwand (12) unterhalb des Deckels (20) und im Wesentlichen mittig zwischen den Seitenwänden (13, 14) angeordnet ist.

## Claims

1. Method for cleaning soiling from the cooking chamber (16) of a cooking device (1), suitable for treating foodstuffs, comprising a pan (10) which consists of an inner wall, preferably formed from a front wall (15), a rear wall (12), two sidewalls (13, 14), and a base (11), whereby an interior space is formed which acts as a cooking chamber (16), a lid (20), which serves to close the cooking chamber (16), an outlet (30), which is formed in the base (11) of the pan (10) and can be closed for optional discharging, in particular of liquid from the cooking chamber (16), and comprises a high-pressure cleaning device (40), which is used for cleaning the cooking chamber (16) of the pan (10), wherein the cooking chamber cleaning device (40) is connected to a supply device for a liquid for introduction into the cooking chamber (16) at high pressure, and a plurality of spray nozzles (42) arranged on a rotatable spray head (41) for introducing liquid into the cooking chamber (16),
**characterised in that**
after introducing the cleaning agent (51) into the cooking chamber (16) and, where appropriate, after the time for the said cleaning agent to act, by means of the liquid jet, which is formed exclusively from water, which is introduced from each spray nozzle (42) under high pressure from the spray head (41) of the cleaning device (40), and which swirls and sprays around the cleaning agent (51), and, where appropriate, after a further time for the spray cleaning agent (51) to act, the soiling is mechanically removed from the base (11), the walls (12, 13, 14, 15) and the inside of the lid (20), and then, together with the wash liquor, is discharged via the outlet (30) from the cooking device, wherein the plurality of spray nozzles (42) are distributed substantially uniformly around a rotational circumference and rotate around an axis (47) that extends perpendicular to an axis (46) around which the spray head (41) which carries the spray nozzles (42) rotates.

2. Method in accordance with claim 1, with the following steps:
a) closing the outlet (30) from the cooking chamber (16) of the pan (10),
b) pouring the cleaning agent (51) into the cooking chamber (16),
c) closing the lid (20),
d) introducing liquid from the spray head (41) of the cleaning device (40) into the cooking chamber (16),
e) dissolving the cleaning agent (51) and intermixing cleaning agent (51) and liquid to form a wash liquor (17) on the base (11) of the cooking chamber (16) of the pan (10) and allowing to act,
f) distributing the wash liquor (17) so formed in the cooking chamber (16) by means of the liquid jet (45) introduced from each spray nozzle (42) under high pressure from the spray head (41) of the cleaning device (40),
g) allowing the distributed wash liquor (17) to act on the soiling in the cooking chamber (16),
h) opening the outlet (30), and
i) removing the loosened soiling by means of the liquid jets (45) from the spray head (41).

3. Method in accordance with claim 2, **characterised in that** the following step is carried out in conjunction with step i): rinsing, in particular by application of fresh water on the walls of the cooking chamber (16) over a predetermined period of time.

4. Method in accordance with claim 2 or 3, **characterised in that** the step f) and the step g) are repeated consecutively a plurality of times.

5. Method in accordance with one of the claims 1 to 4, **characterised in that** the jet from each spray nozzle (42) from the spray head (41) of the cleaning device (40) is so controlled that it raises the wash liquor (17) in waves against the walls of the cooking chamber (16) and the lid (20).

6. Cooking device (1) for treatment of foodstuffs, with a pan (10), which comprises an inner wall, preferably formed from a front wall (15), a rear wall (12), two sidewalls (13, 14), and a base (11), whereby an interior space is formed, which acts as a cooking chamber (16),
a lid (20), which serves to close the cooking chamber (16), an outlet (30), which is formed in the base (11) of the pan (10) and can be closed, for optional discharging, in particular of liquid from the cooking chamber (16), and a cleaning device (40), which is used for cleaning the cooking chamber (16) of the pan (10), wherein the cleaning device (40) is connected to a supply device for a liquid for introduction into the cooking chamber (16) at high pressure, and a plurality of spray nozzles (42) for introducing liquid into the cooking chamber (16), wherein the spray nozzles (42) are arranged to be movable in the cooking chamber (16),
wherein the cleaning device (40) is a high-pressure cleaning device which is in a position to introduce the liquid under high pressure into the cooking chamber (16), wherein the spray nozzles (42) are arranged on a rotatable spray head (41),
**characterised in that**,
the cooking device is in a position to implement the method in accordance with one of the claims 1 to 5,
wherein the cleaning device (40) is in a position to swirl or spray around the cleaning agent (51) introduced into the cooking chamber (16) by means of a liquid, consisting exclusively of water introduced into the cooking chamber (16) under high pressure, wherein the introduction of the liquid by means of the plurality of spray nozzles, which are distributed substantially uniformly around a rotational circumference and rotate around an axis (47) that extends perpendicular to an axis (46) around which the spray head (41) which carries the spray nozzles (42) rotates, is carried out in the form of a hard high-pressure jet from each spray nozzle (42).

7. Cooking device in accordance with claim 6, **characterised in that** the cleaning device (40) is in a position to wet all surfaces of the cooking chamber (16).

8. Cooking device in accordance with claim 6 or 7, **characterised in that** the cleaning agent (51) is formulated as concentrate in liquid form or in the form of a cartridge or a tab.

9. Cooking device in accordance with one of the claims 6 to 8, **characterised in that** the cleaning agent (51) introduced into the cooking chamber (16) forms a wash liquor (17) with liquid contained within the said cooking chamber or subsequently introduced, which is swirled or sprayed around by the high pressure cleaning device (40) in the cooking chamber.

10. Cooking device in accordance with one of the claims 6 to 9, **characterised in that** the cleaning device (40) comprises a removable cleaning lance (43) carrying the spray head (41) that can be fastened in the cooking chamber (20) in the wall (12) of the pan (10).

11. Cooking device in accordance with one of the claims 6 to the 10, **characterised in that** the spray head (41) is arranged in the upper half of the cooking chamber (16), in particular approximately at a distance of a sixth to a third of the height of the rear wall (12) under the lid (20) and essentially centrally between the side walls (13, 14).

## Revendications

1. Procédé de nettoyage de souillures d'un compartiment de cuisson (16) d'un appareil de cuisson (1), adapté au traitement de produits alimentaires, lequel appareil comprend :
un creuset (10), qui présente une paroi intérieure, de préférence formée d'une paroi avant (15), d'une paroi arrière (12), de deux parois latérales (13, 14), et un fond (11), un espace intérieur, qui sert de compartiment de cuisson (16), étant formé de ce fait,
un couvercle (20), qui sert à fermer le compartiment de cuisson (16),
une évacuation (30), réalisée dans le fond (11) du creuset (10) et obturable, pour l'évacuation sélective, en particulier de liquide du compartiment de cuisson (16), et
un dispositif de nettoyage à haute pression (40), qui sert à nettoyer le compartiment de cuisson (16) du creuset (10), le dispositif de nettoyage (40) étant raccordé à un dispositif d'alimentation en liquide pour l'injection sous haute pression dans le compartiment de cuisson (16), et présentant une multiplicité de buses de pulvérisation (42), disposées sur une tête de pulvérisation rotative (41), pour l'injection du liquide dans le compartiment de cuisson (16),
**caractérisé en ce que**,
après l'introduction d'un détergent (51) dans le compartiment de cuisson (16) et éventuellement après son effet dans le temps, au moyen du jet de liquide injecté sous haute pression de chaque tête de pulvérisation (41) du dispositif de nettoyage (40), lequel jet de liquide est formé exclusivement d'eau et fait tourbillonner et/ou projette le détergent (51), et éventuellement après l'effet dans le temps ultérieur du détergent (51) projeté, les souillures sont enlevées mécaniquement du fond (11), des parois (12, 13, 14, 15) et du côté intérieur du couvercle (20), puis sont évacuées, avec le bain de lavage, de l'appareil de cuisson par l'intermédiaire de l'évacuation (30),
dans lequel la multiplicité des buses (42) sont réparties sensiblement uniformément sur une circonférence de rotation et tournent autour d'un axe (47) qui s'étend perpendiculairement à un axe (46) autour duquel tourne la tête de pulvérisation (41) qui porte les buses de pulvérisation (42).

2. Procédé selon la revendication 1, comprenant les étapes suivantes :
a) fermeture de l'évacuation (30) du compartiment de cuisson (16) du creuset (10),
b) remplissage du détergent (51) dans le compartiment de cuisson (16),
c) fermeture du couvercle (20),
d) injection de liquide de la tête de pulvérisation (41) du dispositif de nettoyage (40) dans le compartiment de cuisson (16),
e) dissolution du détergent (51) et mélange du détergent (51) du liquide pour former un bain de lavage (17) sur le fond (11) du compartiment de cuisson (16) du creuset (10) et attente de l'effet,
f) répartition du bain de lavage (17) ainsi formé dans le compartiment de cuisson (16) au moyen du jet de liquide (45), 25 injecté sous haute pression de la tête de pulvérisation (41) du dispositif de nettoyage (40),
g) attente de l'effet du bain de lavage réparti (17) sur les souillures dans le compartiment de cuisson (16),
h) ouverture de l'évacuation (30), et
i) enlèvement des souillures dissoutes au moyen des jets de liquide (45) de la tête de pulvérisation (41).

3. Procédé selon la revendication 2, **caractérisé par** la mise en œuvre de l'étape suivante à la suite de l'étape i) : rinçage, en particulier par alimentation des parois du compartiment de cuisson (16) en eau fraîche sur une période prédéfinie.

4. Procédé selon l'une des revendications 2 et 3, **caractérisé en ce que** l'étape f) et l'étape g) sont réitérées successivement.

5. Procédé selon l'une des revendications 1 à 4, **caractérisé en ce que** le jet de chaque buse de pulvérisation (42) de la tête de pulvérisation (41) du dispositif de nettoyage (40) est contrôlé de sorte qu'il rehausse le bain de lavage (17) en forme d'onde contre les parois du compartiment de cuisson (16) et le couvercle (20).

6. Appareil de cuisson (1) pour le traitement de produits alimentaires, comprenant un creuset (10), qui présente une paroi intérieure, formée de préférence d'une paroi avant (15), d'une paroi arrière (12) de deux parois latérales (13, 14) et un fond (11), un espace intérieur, qui sert de compartiment de cuisson (16), étant formé de ce fait,
un couvercle (20) qui sert à fermer le compartiment de cuisson (16),
une évacuation (30), réalisée dans le fond (11) du creuset (10) et obturable, pour l'évacuation sélective, en particulier de liquide du compartiment de cuisson (16), et
un dispositif de nettoyage (40), qui sert à nettoyer le compartiment de cuisson (16) du creuset (10), le dispositif de nettoyage (40) étant raccordé à un dispositif d'alimentation en liquide pour l'injection dans le compartiment de cuisson (16) et présentant une multiplicité de buses de pulvérisation (42) pour l'injection du liquide dans le compartiment de cuisson (16), les buses de pulvérisation (42) ayant une réalisation mobile dans le compartiment de cuisson (16),
le dispositif de nettoyage (40) étant un dispositif de nettoyage à haute pression, capable d'injecter le liquide sous haute pression dans le compartiment de cuisson (16), les buses de pulvérisation (42) étant disposées sur une tête de pulvérisation rotative (41),
**caractérisé en ce que**
l'appareil de cuisson est en mesure de mettre en œuvre le procédé selon l'une des revendications 1 à 5,
le dispositif de nettoyage (40) étant capable de faire tourbillonner et/ou de projeter dans le compartiment de cuisson (16) un détergent (51), introduit dans le compartiment (16), au moyen du liquide injecté sous haute pression et constitué exclusivement d'eau, l'injection du liquide s'effectuant par la multiplicité de buses de pulvérisation qui sont réparties sensiblement uniformément sur une circonférence de rotation et tournent autour d'un axe (47) qui s'étend perpendiculairement à un axe (46) autour duquel tourne la tête de pulvérisation (41) qui porte les buses de pulvérisation (42), en forme d'un jet dur à haute pression de chaque buse de pulvérisation (42).

7. Appareil de cuisson selon la revendication 6, **caractérisé en ce que** le dispositif de nettoyage (40) est capable de mouiller toutes les surfaces du compartiment de cuisson (16).

8. Appareil de cuisson selon l'une des revendications 6 ou 7, **caractérisé en ce que** le détergent (51) est réalisé sous forme de produit concentré liquide, ou en forme d'une cartouche ou d'une pastille.

9. Appareil de cuisson selon l'une des revendications 6 à 8, **caractérisé en ce que** le détergent (51), introduit dans le compartiment de cuisson (16), avec le liquide situé dans ce dernier ou ensuite injecté, forme un bain de lavage (17), qui est mis en tourbillon et/ou projeté dans le compartiment de cuisson par le dispositif de nettoyage à haute pression (40).

10. Appareil de cuisson selon l'une des revendications 6 à 9, **caractérisé en ce que** le dispositif de nettoyage (40) présente une lance de nettoyage (43) amovible, qui supporte la tête de pulvérisation (41) et peut être fixée dans le compartiment de cuisson (16) dans la paroi (12) du creuset (10) .

11. Appareil de cuisson selon l'une des revendications 6 à 10, **caractérisé en ce que** la tête de pulvérisation (41) est disposée dans la moitié supérieure du compartiment de cuisson (16), en particulier à une distance d'environ un sixième à un tiers de la hauteur de la paroi arrière (12) au-dessous du couvercle (20) et essentiellement au centre entre les parois latérales (13, 14).
